**Europäisches Patentamt**

**European Patent Office**

**Office européen des brevets**

(11) Veröffentlichungsnummer: **0 087 384**

**B1**

(12) # EUROPÄISCHE PATENTSCHRIFT

(45) Veröffentlichungstag der Patentschrift:
**15.01.86**

(51) Int. Cl.⁴: **B 65 H 81/00**

(21) Anmeldenummer: **83730018.5**

(22) Anmeldetag: **15.02.83**

(54) **Verfahren zur Herstellung einer faserverstärkten Druck- und Zugstange.**

(30) Priorität: **17.02.82 DE 3206088**
**20.12.82 DE 3247889**

(43) Veröffentlichungstag der Anmeldung:
**31.08.83 Patentblatt 83/35**

(45) Bekanntmachung des Hinweises auf die Patenterteilung:
**15.01.86 Patentblatt 86/3**

(84) Benannte Vertragsstaaten:
**AT BE CH DE FR GB IT LI LU NL SE**

(56) Entgegenhaltungen:
**DE-A-2 429 475**
**DE-A-2 847 291**
**FR-A-2 351 040**
**US-A-2 277 602**
**US-A-3 741 839**
**US-A-3 888 712**

(73) Patentinhaber: **Siemens Aktiengesellschaft, Berlin und München Wittelsbacherplatz 2, D-8000 München 2 (DE)**

(72) Erfinder: **Christopher, Hans- Günther, Brandenburgische Strasse 3, D-1000 Berlin 41 (DE)**

## Beschreibung

Die Erfindung bezieht sich auf ein Verfahren zur Herstellung einer faserverstärkten, insbesondere hohlzylindrischen Druck- oder Zugstange aus elektrisch isolierendem Kunststoffmaterial mit stirnseitig befestigten Flanscharmaturen zur Druck- oder Zugkraftübertragung, bei dem die aus den Fasern gebildeten Fäden parallel zur Stangenachse orientiert und mit dem aushärtbaren Kunststoffmaterial getränkt werden.

Derartige Druck- oder Zugstangen aus Isolierstoff werden als Kraftübertragungsorgane bei Hochspannungs-Leistungsschaltern verwendet, deren auf Hochspannungspotential liegende Schaltstellen von einem auf Erdpotential liegenden Antrieb betätigt werden. Eine derartige, insbesondere hohlzylindrische Druck- oder Zugstange ist aus der DE-AS 24 29 475 bekannt. Im Bereich der Stirnseiten der Stange sind als Kraftübertragungsorgane Muffen vorgesehen, die die stirnseitigen Bereiche der Rohrwandung der Stange überdecken. Die Muffen sind mittels in die äußere Schicht der Stange eingelegter, über die Rohrwandung radial vorstehender und in Ausnehmungen der Muffe eingreifender Teile mit der Stange formschlüssig verbunden. Die bekannte Druck- oder Zugstange wird im wesentlichen dadurch hergestellt, daß ein Gewebe mit parallel und quer zur Stangenachse orientierten Fäden mit dem elektrisch isolierenden Kunststoffmaterial getränkt wird, wobei das Kunststoffmaterial aushärtbar ist. Es kommen sowohl Naßwickelverfahren als auch Trockenwickelverfahren mit anschließender Tränkung in Betracht.

Selbst bei Anwendung hochbelastbarer Fäden ist die Stange nur insoweit auf Druck oder Zug belastbar, wie die formschlüssige Verbindung zwischen der Muffe und der Stangenaußenschicht auf Scherung belastet werden kann.

Davon ausgehend liegt der Erfindung die Aufgabe zugrunde, ein Verfahren der eingangs genannten Art anzugeben, mit dem Druck- oder Zugstangen mit einer vergleichsweise großen, im wesentlichen nur durch die Zugfestigkeit der parallel zur Stangenachse orientierten Fäden begrenzten Zugbelastbarkeit hergestellt werden können.

Nach der Erfindung wird dies dadurch gelöst, daß die Fäden zwischen konischen Armaturkörpern angeordnet und in transversal zur Stangenachse verlaufenden Ausnehmungen der Armaturkörper formschlüssig festgelegt werden und die formschlüssige Festlegung durch einen Draht, eine Litze oder ein anderes, flexibles, Zugkräfte aufnehmendes Bindeorgan erzielt wird.

Bei einer ersten Ausführungsform werden die Fäden auf mindestens ein Paar im wesentlichen parallel und mit Abstand geführter Drähte zu einem Band gewickelt und die die Bänderkanten bildenden Drähte in schraubenförmige äußere Ausnehmungen der Armaturkörper vor Erzielung des Formschlusses eingelegt.

Vorteilhaft bilden die konischen Armaturkörper und die Vielzahl der im wesentlichen parallel zur Stangenachse verlaufenden Fäden nach dem Aushärten des Kunststoffmaterials einen Verbundkörper, wobei die Fäden mit den Armaturkörpern unmittelbar formschlüssig verbunden sind. An der Kraftübertragung zwischen der Druck- oder Zugstange und dem Armaturkörper nehmen in erster Linie die Fäden teil, während das tränkende bzw. formende Kunststoffmaterial nur mittelbar teilnimmt. Die Gefahr von Abrissen der Armaturkörper bei hohen Zugkräften ist dadurch weitgehend beseitigt.

In Ausgestaltung des Erfindungsgedankens können die Ausnehmungen nach dem Einlegen der die Bandkanten bildenden Drähte in Fadenzugrichtung zugerollt bzw. umgebördelt werden. Die hierbei umgerollten, vorstehenden Teile der schraubenförmigen Ausnehmungen bzw. ihrer Randbegrenzungen stellen einen besonders einfachen Formschluß sicher, so daß die Zugkraftübertragung unabhängig von der Zugfestigkeit der Drähte gewählt werden kann.

Mit dem erfindungsgemäßen Verfahren läßt sich eine rasche Fertigung der Bewicklung erzielen, wenn die Drähte mit Gruppen parallel verlaufender Fäden gewickelt werden. Hierzu ist es vorteilhaft, wenn die Fäden einer umlaufenden Transporteinrichtung, z. B. einem Karussell, mit einer Spule entnommen und durch eine an einer Stelle des Umfangs der Transporteinrichtung angeordneten Fadenführung um die beabstandeten Drähte gewickelt werden.

Eine weitere Ausbildung des Erfindungsgedankens besteht darin, daß die Fäden in konzentrisch zur Stangenachse geführter Anordnung zwischen den konischen Armaturkörpern in hin- und hergehender Bewegung gespannt werden und nach je einem der Stangenlänge entsprechenden Bewegungshub in die Ausnehmungen der Armaturkörper vor dem Formschluß eingelegt werden.

Auch hierbei bilden die konischen Armaturkörper und die Vielzahl der im wesentlichen parallel zur Stangenachse gespannten Fäden nach dem Aushärten des Kunststoffmaterials einen Verbundkörper, wobei die Fäden mit den Armaturkörpern unmittelbar formschlüssig verbunden sind.

Vorteilhaft sind die Ausnehmungen von ringförmigen Nuten gebildet, in die ein Federring zur Festlegung der Fäden eingelegt wird. Dabei können als Mittel zur Festlegung der Fäden auch Drähte, Litzen, Bänder oder andere flexible Bindeorgane Verwendung finden.

Bei mehrteiliger Ausbildung des Armaturkörpers können vorteilhaft die Armaturkörperteile je eine Ausnehmung aufweisen und nach je einem Bewegungshub und Festlegung der Fäden nacheinander gestapelt werden.

Anhand der Zeichnung ist das erfindungsgemäße Verfahren anhand zweier Beispiele beschrieben und die Wirkungsweise erläutert.

In den Figuren 1 und 2 ist in einer Seitenansicht und einer zugehörigen Draufsicht eine Vorrichtung schematisch dargestellt, mit der das erfindungsgemäße Verfahren ausgeübt wird.

In Fig. 3 ist als Einzelheit aus Fig. 1 die Verbindung zwischen Fäden und Armaturkörper zur Druck- und Zugkraftübertragung schematisch im Schnitt dargestellt.

In den Figuren 4 bis 8 ist eine Vorrichtung schematisch dargestellt, mit der ein weiteres erfindungsgemäßes Verfahren ausgeübt wird.

Die Figuren 9 bis 11 zeigen in einer der Figur 3 entsprechenden Einzelheit die Verbindung zwischen Fäden und Armaturkörper zur Druck- und Zugkraftübertragung schematisch im Schnitt.

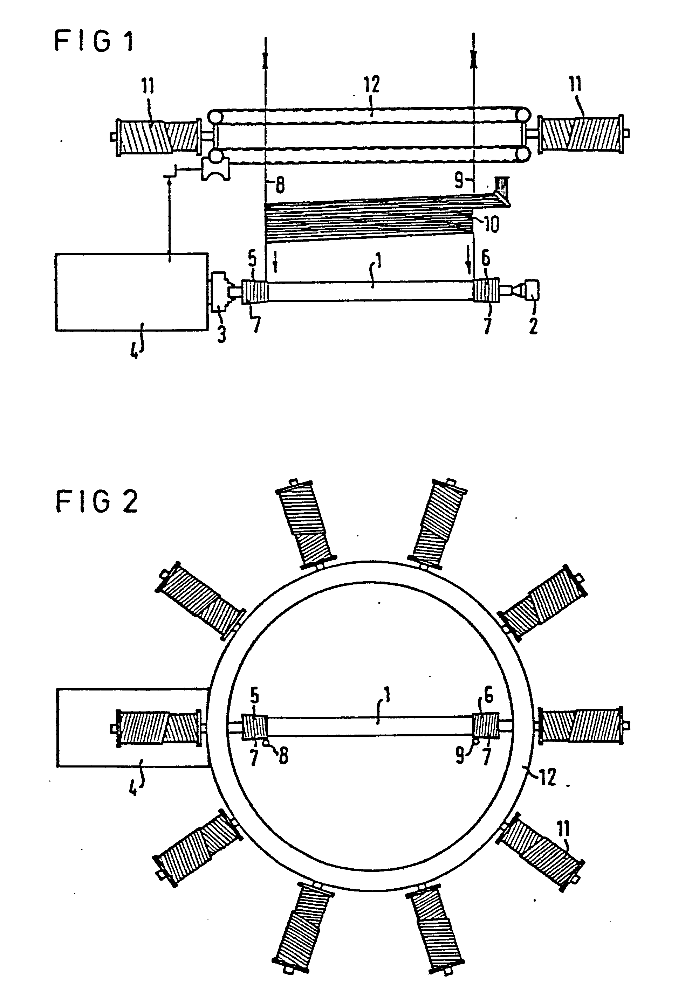

In Fig. 1 ist ein der Länge der vorzugsweise hohlzylindrischen Druck- oder Zugstange angepaßter Wickeldorn 1 vorgesehen, der einerseits in einem Reitstock 2 drehbar gelagert ist und andererseits in einem Futter 3 eingespannt ist, das von einem Antrieb 4 drehbar angetrieben wird. Auf dem Wickeldorn sitzen zu beiden Seiten konische Armaturkörper 5, 6, die mit schraubenförmigen äußeren Ausnehmungen 7 versehen sind. In die Ausnehmung 7 des Armaturkörpers 5 ist ein Draht 8 einlegbar, während in die Ausnehmung 7 des konischen Armaturkörpers 6 ein Draht 9 einführbar ist. Die beiden Drähte 8, 9 sind im wesentlichen parallel geführt und verändern beim Aufspulen ihren Abstand im Sinne einer Verbreiterung.

Um die beiden Drähte 8, 9 werden Fäden 10, insbesondere aus hochzugfesten Kunststoffasern, in Gruppen gewickelt, die einem mehrere Spulen 11 aufweisenden Karussell 12 entnommen werden. Bei Rotation des Karussells werden die Fäden zu einem Band gewickelt, wobei die Bänderkanten von den Drähten 8, 9 gebildet werden. Die so bewickelten Drähte 8, 9 werden in die schraubenförmigen äußeren Ausnehmungen 7 der konischen Armaturkörper 5, 6 eingelegt und darin formschlüssig festgelegt. Dabei können die Ausnehmungen 7 nach dem Einlegen der die Bandkanten bildenden Drähte 8, 9 in Fadenzugrichtung zumindest teilweise zugerollt werden. Durch die gruppenweise Bewicklung der Drähte mit den im wesentlichen parallel verlaufenden Fäden ist eine rasche Fertigung möglich.

Der Durchmesser des Karussells 12 ist ersichtlich von der Länge der zu fertigenden Druck- oder Zugstange abhängig. Für große Stangen kann es daher vorteilhaft sein, anstelle eines Karussells 12 eine andere umlaufende Transporteinrichtung, z. B. ein Kettenband, zu verwenden, das platzsparend um die zu bewickelnden Drähte 8, 9 angeordnet werden kann.

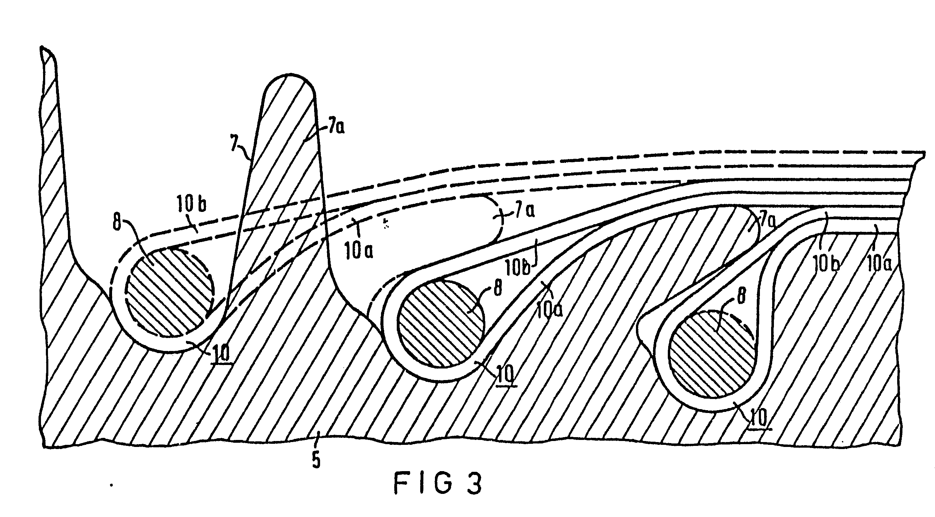

Bei der in der Figur 3 dargestellten Einzelheit ist im Schnitt der in die schraubenförmige Ausnehmung 7 eingelegte Draht 8 in drei Windungen mit den umschlingenden Fäden 10a, b gezeichnet. Aus dieser Einzelheit ist erkennbar, daß der Konuswinkel und die Steigung der gewindeartigen schraubenförmigen Ausnehmung 7 dem Fadendurchmesser zweier parallel geführter Fäden 10a, 10b angepaßt ist, um zu einer möglichst dichten Packung der Fäden zu gelangen. Ferner geht aus Fig. 3 besonders gut der durch Umrollen der schraubenförmigen Ausnehmungen 7 bzw. ihrer Begrenzungskörper 7a bewirkte Formschluß hervor, durch den die Fäden 10a, 10b und der Draht 8 in den Ausnehmungen 7 verankert wird. Das Zurollen der Ausnehmung geschieht vorzugsweise in Fadenzugrichtung.

Anstelle des beschriebenen einen Paares mit Abstand geführter Drähte 8, 9 können auch mehrere parallel geführte Drähte vorgesehen werden, wenn die schraubenförmigen äußeren Ausnehmungen mehrgängig ausgebildet sind.

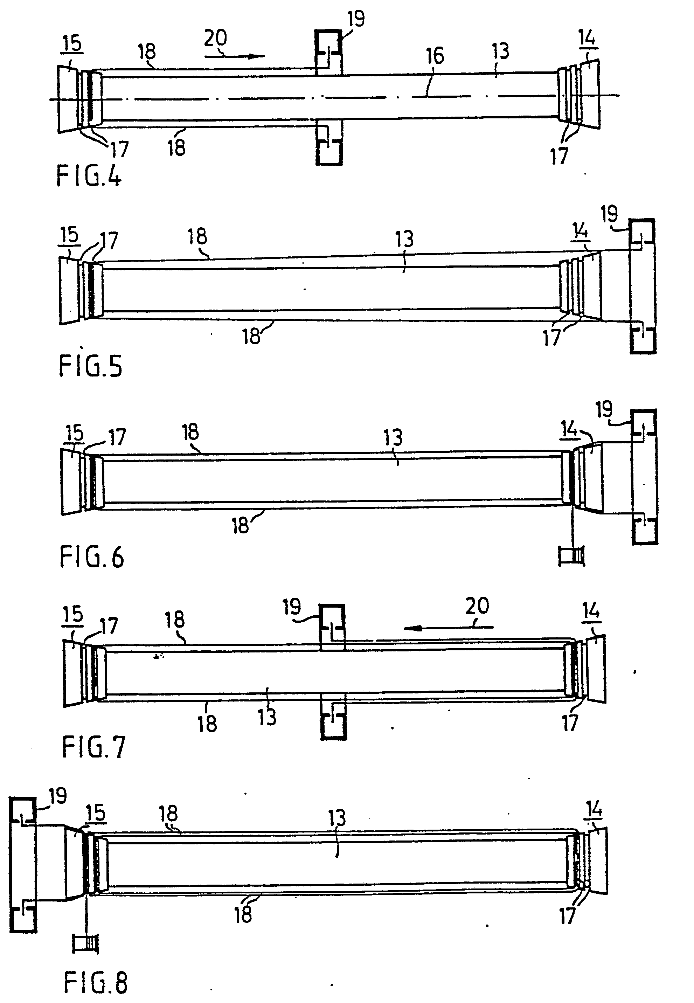

In den Figuren 4 bis 8 ist ein der Länge der vorzugsweise hohlzylindrischen Druck- oder Zugstange angepaßter Aufnahmedorn 13 vorgesehen, der drehbar gelagert und von einem nicht weiter dargestellten Antrieb angetrieben sein kann. Auf dem Aufnahmedorn 13 sitzen zu beiden Seiten konische Armaturkörper 14, 15, die mit transversal zur Stangenachse 16 verlaufenden rillenförmigen Ausnehmungen 17 versehen sind. Die Fäden 18 werden am Armaturkörper 15 in der Ringnut 17 zunächst verankert und von einem ringförmigen Fadenführer 19, der die Fäden konzentrisch zur Stangenachse zwischen den konischen Armaturkörpern anordnet und hin- und hergehend beweglich gelagert ist, zum Armaturkörper 14 gespannt. Dort werden die Fäden 18 in einer Ausnehmung 17 festgelegt, worauf der ringförmige Fadenführer 19 eine Hubbewegung in Pfeilrichtung 20 ausführt. Dies ist in den Figuren 5 und 6 dargestellt.

Die Figur 6 zeigt die Endposition des Fadenführers 19, in der die Fäden 18 in einer weiteren Ausnehmung 17 festgelegt werden. Durch die hin- und hergehende Bewegung des Fadenführers 19 ist eine mehrlagige Anordnung der Fäden möglich. Nach jedem Hub werden die Fäden in einer nächsten freien Ausnehmung 17 der Armaturkörper 14, 15 formschlüssig festgelegt.

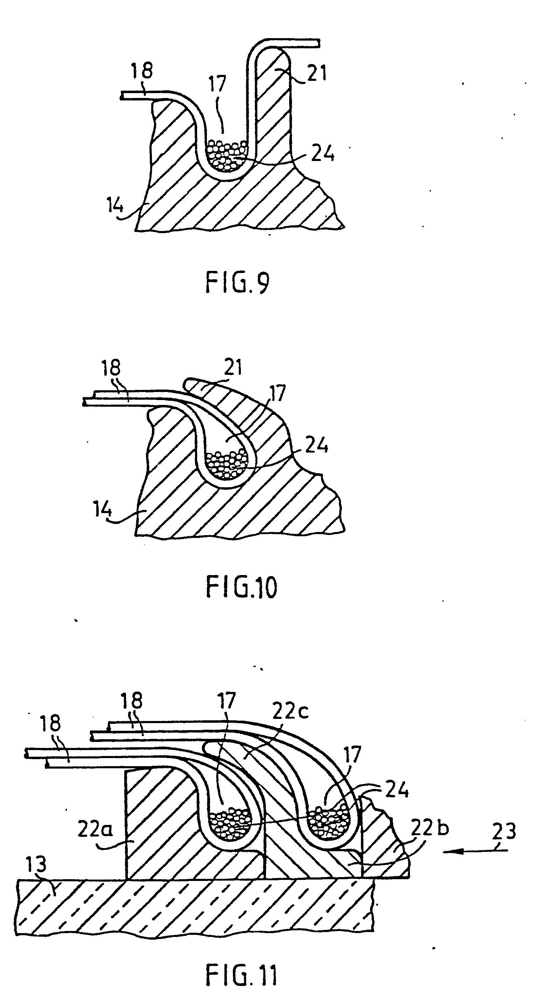

Diese formschlüssige Festlegung ist in den Figuren 9 und 10 in einer Ausführungsform dargelegt, bei der die Fäden 18 durch eine Vielzahl von gleichartigen oder ähnlichen Fäden in der Ausnehmung 17 gehalten sind. Für die Festlegung der Fäden 18 kann auch ein Draht 24, ein Federring, eine Litze oder ein anderes flexibles, Zugkräfte aufnehmendes Bindeorgan in ein- oder mehrfacher Bewicklung eingelegt werden.

Nach der Festlegung der Fäden 18 in der Ausnehmung 17 wird wie beim Ausführungsbeispiel nach Fig. 3 die Ausnehmungsbegrenzung 21 umgebördelt, wie die Figur 10 zu erkennen gibt.

Bei der aus Fig. 11 ersichtlichen Darstellung werden die Fäden 18 innerhalb eines aus mehreren Teilen 22a, 22b zusammengesetzten Armaturkörpers 14, 15 festgelegt. Dabei werden die Ausnehmungen 17 von je einem Armaturkörperteil 22a bzw. 22b gebildet, die einen vorspringenden Rand 22c zur Erzielung eines Formschlusses aufweisen. Nach der Festlegung der Fäden 18 in der Nut 17 wird ein neuer Armaturkörperteil 22b in Pfeilrichtung 23 aufgesetzt, so daß sich eine der Fadenlagenzahl entsprechende Anzahl Armaturkörperteile ergibt.

Während das zuerst beschriebene erfindungsgemäße Verfahren einen kontinuierlichen Verfahrensablauf gestattet, ist die weitere erfindungsgemäße Lösung mit einem intermittierenden Verfahrensablauf versehen.

Die erfindungsgemäßen Verfahren sind sowohl für Naßwickelverfahren geeignet als auch bei Trockenwickelverfahren mit anschließender Tränkung in Betracht zu ziehen.

**Patentansprüche**

1. Verfahren zur Herstellung einer faserverstärkten, insbesondere hohlzylindrischen Druck- oder Zugstange aus elektrisch isolierendem Kunststoffmaterial mit stirnseitig befestigten Flanscharmaturen (5, 6) zur Druck- oder Zugkraftübertragung, bei dem die aus den Fasern gebildeten Fäden (10, 10a, 10b; 18) parallel zur Stangenachse orientiert und mit dem aushärtbaren Kunststoffmaterial getränkt werden, dadurch gekennzeichnet, daß die Fäden (10, 10a, 10b; 18) zwischen konischen Armaturkörpern angeordnet und in transversal zur Stangenachse verlaufenden Ausnehmungen (7, 17) der Armaturkörper (5, 6; 14, 15) formschlüssig festgelegt werden und die formschlüssige Festlegung durch einen Draht (8, 9; 24), eine Litze oder ein anderes, flexibles, Zugkräfte aufnehmendes Bindeorgan erzielt wird.

2. Verfahren nach Anspruch 1, dadurch gekennzeichnet, daß die Fäden (10, 10a, 10b) auf mindestens ein Paar im wesentlichen parallel und mit Abstand geführter Drähte (8, 9) zu einem Band gewickelt werden und die die Bänderkanten bildenden Drähte (8, 9) in schraubenförmige äußere Ausnehmungen (7) der Armaturkörper vor Erzielung des Formschlusses eingelegt werden.

3. Verfahren nach Anspruch 1 oder 2, dadurch gekennzeichnet, daß die Ausnehmungen (7) nach dem Einlegen der Bänderkanten bildenden Drähte (8, 9) in Fadenzugrichtung zugerollt werden.

4. Verfahren nach Anspruch 1 oder 2, gekennzeichnet durch eine Bewicklung der Drähte (8, 9) mit Gruppen parallel verlaufender Fäden (10).

5. Verfahren nach einem der Ansprüche 1 bis 4 dadurch gekennzeichnet, daß die Fäden (10) einer umlaufenden Transporteinrichtung (12) mit mindestens einer Spule (11) entnommen und durch eine an einer Stelle des Umfangs der Transporteinrichtung angeordnete Fadenführung um die beabstandeten Drähte (8, 9) gewickelt werden.

6. Verfahren nach Anspruch 1, dadurch gekennzeichnet, daß die Fäden (18) in konzentrisch zur Stangenachse (16) geführter Anordnung zwischen den konischen Armaturkörpern (14, 15) in hin- und hergehender Bewegung gespannt werden und nach je einem der Stangenlänge entsprechenden Bewegungshub in die Ausnehmungen (17) der Armaturkörper (14, 15) vor dem Formschluß eingelegt werden.

7. Verfahren nach Anspruch 6, dadurch gekennzeichnet, daß die Ausnehmungen (17) von ringförmigen Nuten gebildet sind, in die ein Federring (24) zur Festlegung der Fäden eingelegt wird.

8. Verfahren nach Anspruch 6 oder 7, dadurch gekennzeichnet, daß zur Festlegung der Fäden ein Draht (24), eine Litze oder ein anderes flexibles Zugkräfte aufnehmendes Bindeorgan in ein- oder mehrfacher Bewicklung eingelegt werden.

9. Verfahren nach einem der Ansprüche 6 bis 8, dadurch gekennzeichnet, daß bei mehrteiliger Ausbildung des Armaturkörpers (14, 15) die Armaturkörperteile (22a, 22b) je eine Ausnehmung (17) aufweisen und nach je einem Bewegungshub und Festlegung der Fäden (18) nacheinander gestapelt werden.

**Revendications**

1. Procédé pour fabriquer une barre de pression ou de traction renforcée par des fibres de verre, notamment une barre de pression ou de traction cylindrique creuse, constituée en une matière plastique électriquement isolante et comportant des organes de raccordement à bride (5, 6) fixés frontalement et servant à réaliser la transmission d'une pression ou d'une traction, et selon lequel les filaments (10, 10a, 10b; 18) constitués par des fibres sont orientés parallèlement à la barre et sont imprégnés par la matière plastique durcissable, caractérisé par le fait que les filaments (10, 10a, 10b; 18) sont disposés entre deux organes de raccordement coniques et sont fixés selon une liaison par formes complémentaires dans des évidements (7, 17), disposés transversalement par rapport à l'axe de la barre, des organes de raccordement (5, 6; 14, 15), et que cette fixation par formes complémentaires est obtenue à l'aide d'un fil (8, 9; 24), d'un cordon ou d'un autre organe de liaison flexible absorbant les forces de traction.

2. Procédé suivant la revendication 1, caractérisé par le fait que les filaments (10, 10a, 10b) sont enroulés, de manière à former une bande, sur au moins un couple de fils (8,9) essentiellement parallèles et à distance l'un de l'autre, et que les fils (8, 9) constituant les bords de la bande sont insérés dans des évidements extérieurs (7) de forme hélicoïdale des organes de raccordement, de manière à réaliser la liaison par formes complémentaires.

3. Procédé suivant la revendication 1 ou 2, caractérisé par le fait que les évidements (7) sont rabattus suivant la direction de traction des filaments, après l'insertion des fils (8, 9) constituant les bords de la bande.

4. Procédé suivant la revendication 1 ou 2, caractérisé par un bobinage des fils (8, 9) avec des groupes de filaments parallèles (10).

5. Procédé suivant l'une des revendications 1 à 4, caractérisé par le fait que les filaments (10) sont prélevés d'un dispositif rotatif de transport (12) comportant au moins une bobine (11) et sont enroulés autour des fils (8,9) situés à une distance mutuelle, au moyen d'un guide-filament disposé en un emplacement du pourtour du dispositif de transport.

6. Procédé suivant la revendication 1, caractérisé par le fait que les filaments (18) sont serrés selon un déplacement en va-et-vient et selon une disposition concentrique par rapport à l'axe (16) de la barre, entre les organes de raccordement coniques (14, 15) et sont insérés, après une course de déplacement correspondant à la longueur de la barre, dans les évidements (17) des organes de raccordement (14, 15), avant la liaison par formes complémentaires.

7. Procédé selon la revendication 6, caractérisé en ce que les évidements (17) sont formés par des gorges annulaires, dans lesquelles se trouve inséré une rondelle-ressort (24) servant à fixer les filaments.

8. Procédé suivant la revendication 6 ou 7, caractérisé par le fait que pour la fixation des filaments, on insère un fil (24), un cordon ou un autre organe de liaison flexible supportant les forces de traction, selon un enroulement simple ou multiple.

9. Procédé suivant l'une des revendications 6 à 8, caractérisé par le fait que dans le cas de la réalisation de l'organe de raccordement (14, 15) en plusieurs éléments, les éléments (22a, 22b) des organes de raccordement possèdent chacun des évidements (17) et sont empilés les uns sur les autres respectivement après une course de déplacement et après la fixation des filaments (18).

**Claims**

1. A method of manufacturing a fibre-reinforced, in particular a hollow-cylindrical, pressure bar or tie rod consisting of electrically insulating synthetic resin material with flange fittings (5, 6) which are secured to the end faces and serve to transmit the pressure or tension, wherein the threads (10, 10a, 10b; 18) which are formed from the fibres are oriented parallel to the axis of the rod and impregnated with the hardenable synthetic resin material, characterised in that the threads (10, 10a, 10b; 18) are arranged between conical fitting bodies and are fastened in recesses (7, 17) of the fittinq bodies (5, 6; 14, 15), which extend transversely to the rod axis, in a formlocking fashion, and the form-locking fixing is effected by a wire (8, 9; 24), a cord, or other flexible binding element which takes up the tension.

2. A method as claimed in Claim 1, characterised in that the threads (10, 10a, 10b) are wound onto at least one pair of wires (8, 9), which are guided essentially parallel and spaced apart, to form a tape and the wires (8, 9) forming the edges of the tape are inserted into screw-shaped outer recesses (7) of the fitting bodies before form-locking is obtained.

3. A method as claimed in Claim 1 or Claim 2, characterised in that, after the insertion of the wires (8, 9) which form the tape edges, the recesses (7) are rolled up in the direction of tension of the threads.

4. A method as claimed in Claim 1 or Claim 2, characterised by a winding of the wires (8, 9) with groups of threads (10) which extend in parallel.

5. A method as claimed in one of Claims 1 to 4, characterised in that the threads (10) are taken from a revolving transport device (12) having at least one coil (11), and are wound around the spaced wires (8, 9) through a thread guide which is arranged at a point on the periphery of the transport device.

6. A method as claimed in Claim 1, characterised in that the threads (18) are tightened in an arrangement, directed concentrically to the rod axis (16) between the conical fitting bodies (14, 15) whilst being moved to and fro.

7. A method as claimed in Claim 6, characterised in that the recesses (17) are formed by annular grooves, into which is inserted a spring ring (24) for securing the threads.

8. A method as claimed in Claim 6 or Claim 7, characterised in that, in order to secure the threads, a wire (24), a cord, or other flexible binding element, which takes up tensions, is inserted in a single or multiple winding.

9. A method as claimed in one of Claims 6 to 8, characterised in that when the fitting body (14, 15) is constructed in a plurality of sections, the parts of the fitting body (22a, 22b) have respective recesses (17) and are stacked one after another after a movement stroke and fixing of the threads (18).

FIG 1

FIG 2

F I G 3

FIG.4

FIG.5

FIG.6

FIG.7

FIG.8

5

FIG.9

FIG.10

FIG.11